(19) Europäisches Patentamt
European Patent Office
Office européen des brevets

(11) Veröffentlichungsnummer : **0 058 329**
**B1**

(12) # EUROPÄISCHE PATENTSCHRIFT

(45) Veröffentlichungstag der Patentschrift : **26.09.84**

(21) Anmeldenummer : **82100676.4**

(22) Anmeldetag : **01.02.82**

(51) Int. Cl.³ : **C 08 G 69/00**, C 08 G 81/02, C 08 G 69/48

(54) **Blockcopolymere.**

(30) Priorität : **13.02.81 DE 3105365**

(43) Veröffentlichungstag der Anmeldung : **25.08.82 Patentblatt 82/34**

(45) Bekanntmachung des Hinweises auf die Patenterteilung : **26.09.84 Patentblatt 84/39**

(84) Benannte Vertragsstaaten : **DE FR GB IT**

(56) Entgegenhaltungen :
**DE-A- 2 900 880**
**FR-A- 1 521 223**
**FR-A- 2 291 225**
**US-A- 2 921 043**
**US-A- 3 910 990**

(73) Patentinhaber : **BAYER AG**
**Konzernverwaltung RP Patentabteilung**
**D-5090 Leverkusen 1 Bayerwerk (DE)**

(72) Erfinder : **Grigo, Ulrich, Dr.**
**c/o Mobay Chemical Corporation**
**New Martinsville, W.Va. 26155 (US)**
Erfinder : **Köhler, Karl-Heinz, Dr.**
**Buschstrasse 106**
**D-4150 Krefeld (DE)**
Erfinder : **Binsack, Rudolf, Dr.**
**Bethelstrasse 4a**
**D-4150 Krefeld (DE)**
Erfinder : **Morbitzer, Leo, Dr.**
**Rungestrasse 50**
**D-5000 Köln 80 (DE)**
Erfinder : **Merten, Josef, Dr.**
**Krünsend 30**
**D-4052 Korschenbroich 1 (DE)**
Erfinder : **Bottenbruch, Ludwig, Dr.**
**Woehlerstrasse 5**
**D-4150 Krefeld (DE)**
Erfinder : **Heitz, Walter, Prof. Dr.**
**Am Schmidtborn 5**
**D-3575 Kirchhain (DE)**

**EP 0 058 329 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind Blockcopolymere aus linearen Poly-1,3-dien-Blöcken und Polyamidblöcken.

Polyamide sind für die Herstellung von Fasern und Formkörpern wegen ihrer wertvollen technologischen Eigenschaften, wie z. B. Steifigkeit, Zähigkeit, Spannungskorrosionsbeständigkeit und Lösungsmittelbeständigkeit von Bedeutung.

Thermoplastischen Polyamide weisen jedoch eine relativ geringe reversible Dehnbarkeit auf, wodurch ihr Einsatz auf Gebieten, wo hohe Elastizität gefordert wird, außerordentlich eingeschränkt wird.

Es wurde bereits versucht die elastischen Eigenschaften von Polyamide durch Zusatz von Polybutadien oder Pfropfprodukte auf Basis von Polybutadien zu verbessern.

So werden in der DE-A-2 742 176 elastomer-modifizierte Polyamide beschrieben, die durch Compoundieren von thermoplastischen Polyamiden und Pfropfprodukten aus Polybutadien (Pfropfgrundlage) und (Meth) Acrylaten und/oder Styrol/Acrylnitril-Gemischen (Pfropfauflage) hergestellt worden sind. Die auf diesem Wege erhaltenen Polyamide besitzen eine hohe Kerbschlagzähigkeit, aber ihre reversible Dehnung reicht nicht für alle Einsatzgebiete aus.

Gemäß der Lehre des US-A-3 859 382 wird die Biegsamkeit von Polyamiden bei tiefen Temperaturen durch Einkondensieren von elastomeren Polymerblöcken, die Isocyanatengruppen aufweisen, verbessert, wobei das Ausmaß der Verbesserung der elastischen Eigenschaften nach den in dieser Patentschrift ausführlich dargelegten Untersuchungen mit zunehmendem Molekulargewicht der Polyamidblöcke abnimmt und das Molekulargewicht der Elastomerpolymerblöcke keinen Einfluß auf die Größe der Verbesserung hat. Offenbar gilt dies für den Einbau von Elastomerpolymerblöcke mit Molekulargewichten zwischen 10 000 und 100 000, wie sie in dem genannten US-Patent zum Einsatz kommen.

Überraschenderweise wurde nun festgestellt, daß das Molekulargewicht der Elastomerkomponente einen erheblichen Einfluß auf die Verbesserung der elastischen Eigenschaften von Polyamidblockcopolymeren hat, da durch den Einbau von relativ kurzkettigen Polydienblöcken in Polyamide eine weit größere Verbesserung der elastischen Eigenschaften, insbesondere der reversiblen Dehnung erzielt werden kann, als dies durch Einbauen von Polydienblöcken mit Molekulargewichten von 10 000 und mehr erreicht wird.

Gegenstand der vorliegenden Erfindung sind daher Blockcopolymere, hergestellt aus

I. 1-60 Gew.-%, vorzugsweise 5-45 Gew-%, telecheler Dienpolymerisaten mit endständigen Carbonatestergruppen, —OH-Gruppen, —$NH_2$-Gruppen, Carbonsäureester oder Carbonsäuregruppen und einem Molekulargewicht Mn von 400-5 000, vorzugsweise 450-3 000, und

II. 99-40 Gew.-%, vorzugsweise 95-55 Gew.-%, Polyamiden oder Polyamid-bildenden Komponenten.

Die erfindungsgemäß verwendeten Polydiene sind vorzugsweise lineare Verbindungen mit 2 endständigen reaktiven Gruppen der allgemeinen Formel

$$R^1—R—(X)_n—R—R^1,$$

in der

X = 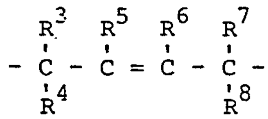 und/oder 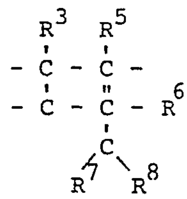

mit $R^3$ bis $R^8$ = $C_1$-bis $C_4$-Alkyl, H, Halogen ; n = 4 bis 60 ; R = Einfachbindung oder eine Alkylidengruppe mit $C_1$-$C_3$ wie —$CH_2$—, $-\underset{CH_3}{CH}-$, —$C(CH_3)_2$— und $R^1$ = —$OCOOR^2$, —$COOR^2$, —OH, —$NH_2$, mit $R^2$ = Alkyl mit 1 bis 10 C-Atomen, Cycloalkyl mit 5 bis 10 C-Atomen oder Wasserstoff außer bei —$OCOOR^2$ bedeuten.

Sie lassen sich z. B. nach den in den DE-A-2 900 880 und den DE-A-2 908 298 beschriebenen Verfahren aus gegebenenfalls substituierten 1,3-Dienen, wie z. B. Butadien, Isopren, Dimethylbutadien und Chloropren und Radikalinitiatoren, wie z. B. Dialkylperoxidicarbonate oder Azodicarbonsäureester vorzugsweise in einer Massepolymerisation herstellen. Aus den dabei erhaltenen Polydienen mit endständige Carbonatestergruppen können Polydiene mit entständigen Hydroxygruppen durch Hydrolyse oder aus Polydienen mit endständigen Carbonsäureestergruppen durch Reduktion der Estergruppe hergestellt werden.

In den erfindungsgemäß verwendeten Poly-1,3-dienen sind die Dieneinheiten über 1,2- und/oder 1,4-Positionen miteinander verknüpft. Bevorzugt werden 1,3-Polydiene eingesetzt, bei denen mindestens 50 Mol-%, vorzugsweise 70 Mol-%, der Monomereinheiten über 1,4-Bindungen miteinander verknüpft sind.

Die erfindungsgemäß zu verwendeten Polydiene haben ein Molekulargewicht (Zahlenmittel des Molekulargewichtes) $M_n$ von 400-5 000, bevorzugt 450 bis 3 000.

Bevorzugte Polydiene bestehen aus Einheiten von Butadien, Isopren, Dimethylbutadien und/oder Chloropren und besonders bevorzugt aus Butadien und Isopren.

Die Polyamidkomponente kann aus Lactamen mit 4-12-C-Atomen im Ring oder entsprechenden ω-Aminosäuren, wie z. B. Caprolactam, Undekanlactam, Dodekanlactam, 11-Aminoundekansäure, 12-Aminododekansäure, hergestellt werden.

Die Polyamidkomponente kann auch ein Kondensationsprodukt einer aliphatischen, alicyclischen oder aromatischen Dicarbonsäure mit 2 bis 12 C-Atomen wie z. B. Bernstein-, Adipin-, Kork-, Azelain-, Sebacin, Undekandi-, Dodekandisäure, Terephthalsäure, Isophthalsäure, Cyclohexandicarbonsäure mit einem aliphatischen, alicyclischen oder aromatischen Diamin mit 2 bis 12 C-Atomen wie z. B. Hexamethylendiamin, m- und/oder p-Xylylendiamin; 2,2,4-Trimethylhexamethylendiamin, Isophorondiamin, Bis-4-Aminocyclohexylmethan sein.

Von diesen Polyamiden eignen sich besonders Polyamide aus Adipinsäure bzw. Azelainsäure und Hexamethylendiamin bzw. Bis(4-aminocyclohexyl)-methan und/oder ε-Caprolactam und/oder Laurinlactam.

Bevorzugt sollte das Molekulargewicht $M_n$ der Polyamidkomponente 500 bis 10 000 betragen.

Die erfindungsgemäßen Blockcopolymere können einerseits durch übliche Kondensation der Polyamid-bildenden Ausgangsverbindungen in Gegenwart der telechelen Polymeren gebildet werden.

Dabei hat sich eine stufenweise Umsetzung als besonders vorteilhaft erwiesen, wobei zunächst ein Poly-1,3-dien mit endständigen Estergruppen bzw. mit endständigen Hydroxylgruppen mit einem Überschuß an Diamin bzw. Dicarbonsäure unter Stickstoffatmosphäre bei Temperaturen zwischen 180 und 250 °C umgesetzt wird. In einem weiteren Schritt erfolgt dann nach Zugabe weiterer Polyamidbildender Monomere die eigentliche Polykondensation bei Temperaturen zwischen 220 °C und 310 °C. Die Reaktion sollte insgesamt so geführt werden, daß eine möglichst hohe Endviskosität erreicht wird, ohne daß Vernetzung oder Gelbildung auftritt. Um Produkte mit relativ hoher Endviskosität zu erreichen, ist es weiterhin zweckmäßig, auf ein genaues äquimolares Verhältnis zwischen den Carboxyl- und Aminoendgruppen zu achten.

Die Kondensation zum erfindungsgemäßen elastomeren Copolymeren kann auch andererseits so erfolgen, daß zunächst in einer Vorreaktion ein Polyamidblock mit Carboxylendgruppen hergestellt wird, der in einem zweiten Schritt entweder mit einem Polydien mit Amino- oder mit —OH-Endgruppen umgesetzt wird. Bei Einsatz des letztgenannten Polydiens ist es zweckmäßig, die Blockpolymerbildung unter Polyesterbedingungen zu fahren, d. h. unter Vakuum und gegebenenfalls mit einem Katalysator wie z. B. Titantetraisopropylat. Polyamidblöcke mit Carboxylendgruppen erhält man durch Polykondensation mit einem Überschuß an Dicarbonsäure, wobei je nach Überschuß, die Länge der makromolekularen Kette und demzufolge das mittlere Molekulargewicht zusätzlich variiert werden kann.

Die erfindungsgemäßen Blockcopolymere sollen vorzugsweise eine relative Viskosität von etwa 1,8 bis 4,0, vorzugsweise von 1,0 bis 3,5, gemessen in m-Kresol bei 23 °C haben.

Die herausragende Eigenschaft der erfindungsgemäßen Blockcopolymere ist die relativ hohe reversible Dehnung, wie sie aus einem entsprechend angelegten Zugversuch nach DIN 53 455 bestimmbar ist. Hierbei wird der Prüfkörper bei entsprechender Belastung um einen bestimmten Betrag gedehnt. Nach Beendigung der Belastung wird die verbleibende Restdehnung gemessen. Die Differenz aus Dehnung bei Belastung und nach Entlastung ist die reversible Dehnung. Dementsprechend folgt für die relative Dehnung :

$$\text{relative reversible Dehnung} = \frac{\text{(Dehnung bei Belastung) minus (Dehnung nach Entlastung)}}{\text{Dehnung bei Belastung}} \cdot 100$$

Je höher die reversible Dehnung ist, um so mehr kann daher ein deformierter Körper seine ursprüngliche Form wieder einnehmen.

Diese Eigenschaft ermöglicht die erfindungsgemäßen Blockcopolymere, insbesondere zur Herstellung von Formkörpern z. B. Stoßfänger, Kotflügel oder Karosserieteile zu verwenden.

Daneben weisen die erfindungsgemäßen Blockcopolymere gegenüber den unmodifizierten Polyamiden eine unverminderte Zähigkeit auf. Üblicherweise ist die Zähigkeit der Blockcopolymere gegenüber den unmodifizierten Polyamiden erhöht.

Die erfindungsgemäßen Blockcopolymere können in der üblichen Weise modifiziert werden. Sie können daher z. B. Verstärkungs- und Füllstoffe, insbesondere Glasfasern, Flammschutzmittel, Stabilisatoren, Nucleier-, Gleit- und Formtrennmittel sowie Farbstoffe und Pigmente enthalten.

Die Verstärkungs- und Füllstoffe, die zur Erhöhung der Steifigkeit und der Festigkeit dienen, werden in üblichen Mengen von 5 bis 40 Gew.-%, bezogen auf die Summe aus Additiv und Blockcopolymere, verwendet. Als solche kommen beispielsweise in Frage :

Glasfasern, Kaolin, Quarz, Glimmer, Wollastonit, Talkum, Titandioxid, Aluminiumoxid. Bevorzugt sind Glasfasern.

A) Herstellung von Poly-1,3-diendicarbonsäuredimethylester

α) Die Herstellung des in den Beispielen Nr. 1 bis 6 und den Vergleichsbeispielen II und III verwendeten Polybutadiendicarbonsäuredimethylesters erfolgt durch Massepolymerisation von Butadien, indem zu 55 g, bzw. 39 g, bzw. 21 g, bzw. 7 g Azobisisobuttersäuremethylester — unter Stickstoff-Atmosphäre — 325 g 1,3-Butadien gegeben werden. Die Reaktionsmischung wird unter Rühren 14 bis 16 Stunden bei 80 °C gehalten, wobei die Polymerisation unter dem Eigendruck des Systems (ca. 12 bar) abläuft. Danach wird das überschüssige Butadien abdestilliert. Restliches Butadien sowie Tetramethylbernsteinsäuredimethylester, der als Nebenprodukt entstanden ist, werden 6 Stunden am Rotationsverdampfer bei 0,1 mbar und einer Badtemperatur von 90 °C entfernt. Es bleiben 174 g, bzw. 140 g, bzw. 95 g, bzw. 40 g eines glasklaren flüssigen Produkts mit $M_n$ von 800 (bestimmt nach der Dampfdruckosmose) und 78 Mol-% 1,4-Verknüpfungen bzw. 1 000 und 79 Mol-% 1,4-Verknüpfungen bzw. 1 300 und 80 Mol-% 1,4-Verknüpfungen bzw. 6 000 und 82 Mol-% Verknüpfungen übrig.

β) Analog zu der Herstellung von Polybutadiendicarbonsäuredimethylestern wurde ein Polyisoprendicarbonsäuredimethylester mit einem $M_n$ von 1 000 durch Umsetzung von 22 g Azo-bisisobuttersäuremethylester und 325 g Isopren hergestellt.

B) Herstellung von Polybutadien mit OH-Endgruppen

Die Herstellung der in den Beispielen Nr. 7 bis 11 verwendeten Hydroxyl-tertminierten Polybutadiene erfolgt durch Massepolymerisation von Butadien, indem zu einer Lösung von 7,47 g Diethylperoxidicarbonat in 50 ml Hexan — unter $N_2$-Atmosphäre — 130 g Butadien gegeben werden. Die Reaktionsmischung wird unter Rühren 4 Stunden bei 65 °C und dann 2 Stunden bei 80 °C gehalten. Danach wird das überschüssige Butadien abdestilliert. Restliches Butadien sowie eventuell durch Nebenreaktionen entstandene niedermolekulare Nebenprodukte werden während 6 Stunden am Rotationsverdampfer bei 0,1 mbar und einer Badtemperatur von 90 °C entfernt. Es bleiben 26,1 g eines glasklaren Produkts mit $M_n = 800$ zurück. Die Carbonatendgruppen werden durch alkalische Verseifung in Hydroxylgruppen übergeführt.

## Beispiele 1 und (2)

In einem mit Rührer und mit für eine Destillation ausgerüsteten Reaktionsgefäß werden unter Stickstoff-Atmosphäre folgende Reaktionskomponenten 4 Stunden bei 220 °C umgesetzt. Die Mengen für Beispiel 2 sind in ( ) gesetzt.

10 (20) g [10 (20) m Mol] Polybutadien[1]) (Mn = 1 000)
4,6 (9,3) g [40 (80) m Mol] Hexamethylendiamin

Anschließend werden

4,4 (8,8) g [30 (60) m Mol] Adipinsäure
81,9 (72,8) g [0,72 (0,64) Mol] ε-Caprolactam
9,4 (8,3) g [72 (63) m Mol] Aminocapronsäure

dazugegeben und 1 Stunde bei 220 °C sowie 5 Stunden bei 270 °C verrührt.
Es entsteht eine weiße, leicht trübe, hochviskose Schmelze.
Die Schmelze wird abgekühlt, granuliert und zur Entfernung des nicht umgesetzten ε-Caprolactams 4 Stunden mit Methylenchlorid extrahiert.

## Beispiel 3

In einem mit Rührer und mit für eine Destillation ausgerüstetem Reaktionsgefäß werden unter Stickstoff-Atmosphäre folgende Reaktionskomponenten 2 Stunden bei 270 °C umgesetzt :

20 g (25 m Mol) Polybutadien[1]) (Mn = 800)
11,7 g (55 m Mol) Bis-(4-aminocyclohexyl) methan

[1]) mit Isobuttersäuremethylester-Endgruppen

Anschließend werden

4,4 g (30 m Mol) Adipinsäure
85,9 g (0,33 Mol) AH-Salz und
3,8 g (≙10 %) Überschuß an Hexamethylendiamin

dazugegeben und 15 Minuten bei 270 °C sowie 2 Stunden bei 290 °C verrührt.
Es entsteht eine weiße, viskose Schmelze.

## Beispiel 4

In einem mit Rührer und mit für eine Destillation ausgerüstetem Reaktionsgefäß werden unter Stickstoff-Atmosphäre folgende Reaktionskomponenten 4 Stunden bei 220 °C umgesetzt.

130,0 g (100 m Mol) Polybutadien[1]) (Mn = 1 300)
41,6 g (358 m Mol) Hexamethylendiamin

Es entsteht ein leicht gelbes, dünnflüssiges Öl.
Anschließend werden unter Stickstoff-Atmosphäre in einem 250 ml Rundkolben

76,2 g (118,8 m Mol) des mit Diamin modifizierten Polybutadiens
11,44 g (118,8 m Mol) Azelainsäure
272,1 g (0,9 Mol) Azelainsäure-Hexamethylendiamin-Salz

1 Stunde bei 200 °C und 2 Stunden bei 250 °C verrührt.

Es entsteht eine leicht gelbe, schwach trübe, hochviskose Schmelze.

## Beispiele 5 und 6

Diese elastomeren Blockcopolymeren werden analog den Beispielen 1 und 2 mit einem Polyisopren als elastomeren Komponente (Mn = 1 000) hergestellt.

## Beispiele 7 und 8

In einem mit Rührer und mit für eine Destillation ausgerüstetem Reaktionsgefäß werden

90 g (80 g) [71,4 (63,5) m Mol] Polyamid (Mn = 2 500)
10 g (20 g) [20 (40) m Mol] Poly-1,3-butadien mit OH-Endgruppen

2,3 g (1,06) [51,4 (23,5) m Mol] 1,4-Butandiol sowie 5 ml einer 1 %igen Titantetraisopropylat-Lösung in Isopropanol zwei Stunden bei 220 °C und eine Stunde bei 230 °C unter Stickstoff-Atmosphäre sowie zwei Stunden bei 270 °C unter einem Vakuum < 1,33 mbar (1 Torr) verrührt.

## Beispiel 9

Analog Beispiel 7 werden anstelle von 40 m Mol Polybutadien 40 m Mol Poly-isopren mit OH-Endgruppen und einem Molekulargewicht von Mn = 1 000 eingesetzt.

## Beispiel 10

Unter den Reaktionsbedingungen des Beispiels 7 werden

70 g (55,5 m Mol) Polyamid (Mn = 2 500)
36 g (60 m Mol) Polyisopren und OH-Endgruppen (Mn = 1 000)
0,33 g (4,5 m Mol) Adipinsäure

sowie 5 ml einer 1 %igen Titantetraisopropylat-Lösung in Isopropanol verrührt.

## Beispiel 11

Unter den Reaktionsbedingungen des Beispiels 7 werden :

[1]) mit Isobuttersäuremethylester-Endgruppen

60 g (47,6 m Mol) Polyamid (Mn = 2 500)
49 g (80 m Mol) Polyisopren mit OH-Endgruppen (Mn = 1 000)
1,37 g (32,4 m Mol) Adipinsäure

sowie 5 ml einer Titanisopropylat-Lösung in Isopropanol verrührt.

Vergleichsbeispiel I

80 Tle Polyamid-6 ($\eta_{rel}$ = 3,02) werden mit einem Polybutadien mit einem Mn ≈ 70 000 (88 % 1,4-Anteil) auf einem kontinuierlich arbeitenden Doppelwellenextruder ZSK 32 der Fa. Werner & Pfleiderer gemischt. Die Zylindertemperatur wird so eingestellt, daß eine Massetemperatur von 280 °C gewährleistet ist. Der Schmelzestrang wurde in Wasser abgekühlt, granuliert und getrocknet.

Vergleichsbeispiel II

In einem mit Rührer und mit für eine Destillation ausgerüstetem Reaktionsgefäß werden unter Stickstoff-Atmosphäre folgende Reaktionskomponenten 4 Stunden bei 220 °C umgesetzt :

20 g (67 m Mol) Polybutadien mit einem Molekulargewicht von 300 und mit Isobuttersäuremethylester-Endgruppen
11,6 g (100 m Mol) Hexamethylendiamin

anschließend werden

6,9 g (33 m Mol) Adipinsäure
72,8 g (0,64 Mol) ε-Caprolactam
8,3 g (63 m Mol) Aminocapronsäure

dazugegeben und 1 Stunde bei 220 °C sowie 5 Stunden bei 270 °C verrührt. Es entsteht eine leicht trübe, hochviskose Schmelze.

Die Schmelze wird abgekühlt, granuliert und zur Entfernung des nicht umgesetzten ε-Caprolactams 4 Stunden mit Methylenchlorid extrahiert.

Vergleichsbeispiel III

In einer Apparatur und unter Bedingungen wie im Vergleichsbeispiel II werden

20 g (3,3 m Mol) Polybutadien (Mn = 6 000) mit Isobuttersäuremethylestergruppen mit
1,16 g (10 m Mol) Hexamethylendiamin umgesetzt.

Anschließend werden

0,98 g (6,7 m Mol) Adipinsäure
72,8 g (0,64 Mol) ε-Caprolactam
8,3 g (63 m Mol) Aminocapronsäure

dazugegeben und 1 Stunde bei 220 °C sowie 5 Stunden bei 270 °C verrührt.

Es entsteht eine weiße, hochviskose Schmelze.

Die Schmelze wird abgekühlt, granuliert und zur Entfernung des nicht umgesetzten ε-Caprolactams 4 Stunden mit Methylenchlorid extrahiert.

Von den in den Beispielen beschriebenen Polymeren werden auf einer üblichen Spritzgußmaschine bei 260 °C Normkleinstäbe (nach DIN 53 453) und Zugstäbe (nach DIN 53 455) verspritzt. Geprüft wurde an den Normkleinstäben die Schlagzähigkeit bei Raumtemperatur (nach DIN 53 453) und an den Zugstäben die relative reversible Dehnung (nach DIN 53 455).

Die Zusammensetzung und die Eigenschaften der Blockcopolymeren sind den Tabellen 1 und 2 zu entnehmen.

(Siehe Tabellen 1 und 2, Seite 7 ff.)

Tabelle 1

Elastomere Blockpolyamide mit Poly-1,3-dienen-Blöcken

| Bei- | Polyamid | | Poly-1,3-dien | | | $\eta$ rel. [2] | rel. reversible | Schlägzähigkeit | Schmelzp. [3] |
|---|---|---|---|---|---|---|---|---|---|
| spiel | Typ | Gew.-Tl. | Gew.-Tl. | Mn | Monomer | | Dehnung % | KJ/m² | °C |
| 1 | PA-6 | 90[1] | 10 | 1000 | Butadien | 2,7 | 25 | nicht gebr. | 218 |
| 2 | PA-6 | 80[1] | 20 | 1000 | " | 2,2 | 31 | " " | 208 |
| 3 | PA-66 | 80 | 20 | 800 | " | 2,1 | 27 | " " | 251 |
| 4 | PA-69 | 80 | 20 | 1300 | " | 2,3 | 38 | " " | 212 |
| 5 | PA-6 | 90[1] | 10 | 1000 | Isopren | 2,7 | 26 | " " | 219 |
| 6 | PA-6 | 80[1] | 20 | 1000 | " | 2,4 | 30,5 | " " | 210 |
| | PA-6 | 100 | - | | | 2,91 | 17 | " " | 223 |
| | PA-66 | 100 | - | | | 3,00 | 15 | " " | 262 |
| | PA-69 | 100 | - | | | 3,2 | 21 | " " | 217 |
| I | PA-6 | 80 | 20 | 70000 | Butadien | nicht bestimmbar | 18 | " " | 221 |
| II | PA-6 | 80 | 20 | 300 | " | 3,1 | 20 | 38 | 209 |
| III | PA-6 | 80 | 20 | 6000 | " | 2,9 | 19 | nicht gebr. | 219 |

[1]) bezogen auf den Ansatz ; der tatsächliche PA-Anteil im Blockpolymeren ist etwas kleiner, da ein geringer Teil des ε-Caprolactams nicht reagiert bzw. anschließend extrahiert wird.

[2]) gemessen in m-Kresol bei 23 °C

[3]) Maximum der Hauptschmelztemperatur, gemessen nach der DSC-Methode beim 2. Aufheizen

Tabelle 2

Elastomere Blockpolyamide mit Poly-1,3-dienen-Blöcken

| Bei- | Polyamid | | Poly-1,3-dien | | | $\eta_{rel}$[2] | rel. reversible | Schlagzähigkeit | Schmelzp. |
|---|---|---|---|---|---|---|---|---|---|
| spiel | Typ | Gew.-% | Monomer | Mn | Gew.-% | | Dehnung % | $a_n$ KJ/m$^2$ | °C |
| 7 | PA-6 | 90[1] | Butadien | 1000 | 10 | 3,02 | 27 | nicht gebr. | 221 |
| 8 | PA-6 | 80 | " | 1000 | 20 | 3,74 | 34 | " | 220 |
| 9 | PA-6 | 80 | Isopren | 1000 | 20 | 2,75 | 36 | " | 220 |
| 10 | PA-6 | 70 | " | 1000 | 30 | 2,62 | 45 | " | 212 |
| 11 | PA-6 | 60 | " | 1000 | 40 | 2,41 | 50 | " | 207 |

[1]) bezogen auf den Ansatz ; der tatsächliche Anteil ist etwas kleiner
[2]) gemessen in m-Kresol bei 23 °C

**Ansprüche**

1. Blockcopolymere hergestellt aus

I. 1-60 Gew.-% telecheler Dienpolymerisate mit endständigen Carbonatester-, —OH—, —$NH_2$—, Carbonsäure- oder Carbonsäureestergruppen und einem Molekulargewicht $M_n$ von 400-5 000 und
II. 99-40 Gew.-% von Polyamiden oder Polyamidbildenden Komponenten.

2. Blockcopolymere nach Anspruch 1, hergestellt aus 5-45 Gew.-% der Komponente I und 95-55 Gew.-% der Komponente II.

3. Blockcopolymere nach Anspruch 1 oder 2, dadurch gekennzeichnet, daß die Komponente I eine Verbindung der allgemeinen Formel

$$R^1—R—(X)_n—R—R^1,$$

in der

X = 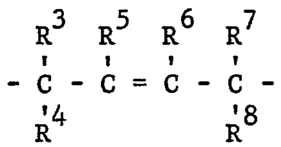 und/oder 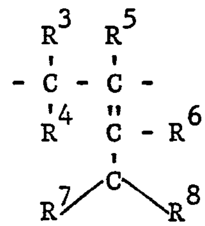

mit $R^3$ bis $R^8$ = $C_1$- bis $C_4$-Alkyl, H, Halogen ; n = 4 bis 60 ; R = Einfachbindung oder eine Alkylidengruppe mit $C_1$-$C_3$ und $R^1$ = —$OCOOR^2$, —$COOR^2$, —OH, —$NH_2$, mit $R^2$ = Alkyl mit 1 bis 10 C-Atomen, Cycloalkyl mit 5 bis 10 C-Atomen oder Wasserstoff, außer bei —$OCOOR^2$, bedeuten.

4. Blockcopolymere nach Ansprüchen 1-3, dadurch gekennzeichnet, daß die Komponente I ein Molekulargewicht $M_n$ von 450-3 000 hat.

5. Blockcopolymere nach den Ansprüchen 1-4, dadurch gekennzeichnet, daß die Komponente I Polybutadien oder -isopren ist.

6. Formkörper aus Blockcopolymeren nach den Ansprüchen 1-5.

**Claims**

1. Block copolymers produced from

I. 1-60 % by weight of telechelic diene polymers containing terminal carbonate ester, —OH—, —$NH_2$—, carboxylic acid or carboxylic acid ester groups and having a molecular weight $M_n$ of 400-5 000 and
II. 99-40 % by weight of polyamides or polyamide-forming components.

2. Block copolymers according to Claim 1, produced from 5-45 % by weight of component I and 95-55 % by weight of component II.

3. Block copolymers according to Claim 1 or 2, characterised in that component I a compound of the general formula

$$R^1—R—(X)_n—R—R^1$$

in which

X denotes = 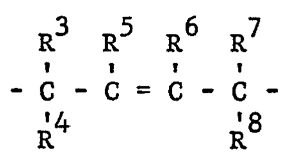 and/or 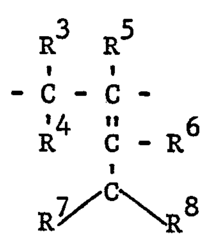

in which $R^3$ to $R^8$ = $C_1$- to $C_4$-alkyl, H, or halogen ; n denotes 4 to 60 ; R denotes a single bond or an alkylidene group with $C_1$-$C_3$ and $R^1$ denotes —OCOOR$^2$, —COOR$^2$, —OH, —NH$_2$, in which $R^2$ = alkyl with 1 to 10 C atoms, cycloalkyl with 5 to 10 C atoms or hydrogen, except in the case of —OCOOR$^2$.

4. Block copolymers according to Claims 1-3, characterised in that component I has a molecular weight $M_n$ of 450-3 000.

5. Block copolymers according to Claims 1-4, characterised in that component I is polybutadiene or polyisoprene.

6. Mouldings produced from block copolymers according to Claims 1-5.

**Revendications**

1. Copolymères séquencés préparés à partir de

I. 1 à 60 % en poids de polymères à 2 groupes terminaux fonctionnels de diènes à groupes terminaux ester carbonique, —OH, —NH$_2$, acide carboxylique ou ester d'acide carboxylique, poids moléculaire Mn = 400 à 5 000 et

II. 99 à 40 % en poids de polyamides ou de composants formant des polyamides.

2. Copolymères séquencés selon la revendication 1, préparés à partir de 5 à 45 % en poids du composant I et 95 à 55 % en poids du composant II.

3. Copolymères séquencés selon la revendication 1 ou 2 caractérisés en ce que le composant I est un composé de formule générale

$$R^1—R—(X)_n—R—R^1$$

dans laquelle

X = 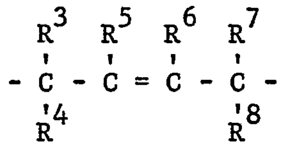 et/ou 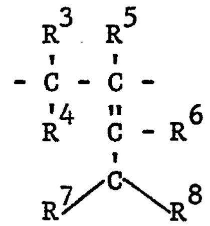

$R^3$ à $R^8$ représentant des groupes alkyles en $C_1$-$C_4$, l'hydrogène ou des halogènes ; n = 4 à 60 ; R représente une liaison simple ou un groupe alkylidène en $C_1$-$C_3$ et $R^1$ = —OCOOR$^2$, —COOR$^2$, —OH, —NH$_2$, $R^2$ = alkyle en $C_1$-$C_{10}$, cycloalkyle en $C_5$-$C_{10}$ ou l'hydrogène, sauf dans le cas de —OCOOR$^2$.

4. Copolymères séquencés selon les revendications 1 à 3, caractérisés en ce que le composant I a un poids moléculaire $M_n$ de 450 à 3 000.

5. Copolymères séquencés selon les revendications 1 à 4, caractérisés en ce que le composant I est un polybutadiène ou un polyisoprène.

6. Objets moulés en copolymères séquencés selon les revendications 1 à 5.